(19) **Europäisches Patentamt**

**European Patent Office**

**Office européen des brevets**

(11) **EP 1 156 315 A2**

(12) **EUROPÄISCHE PATENTANMELDUNG**

(43) Veröffentlichungstag:
**21.11.2001 Patentblatt 2001/47**

(51) Int Cl.[7]: **G01M 3/02**, G01M 3/32

(21) Anmeldenummer: **01110926.1**

(22) Anmeldetag: **05.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **18.05.2000 DE 20008977 U**

(71) Anmelder: **Heidt, Frank-Dietrich, Prof. Dr.-Ing.**
**57234 Wilnsdorf (DE)**

(72) Erfinder: **Heidt, Frank-Dietrich, Prof. Dr.-Ing.**
**57234 Wilnsdorf (DE)**

(74) Vertreter: **Pürckhauer, Rolf, Dipl.-Ing.**
**Am Rosenwald 25**
**57234 Wilnsdorf (DE)**

(54) **Gerät zur Überprüfung der Luftdichtheit einer Gebäudehülle**

(57)   Um ein Gerät zur Überprüfung der Luftdichtheit einer Gebäudehülle, mit einem Gebläse, einem Einbaurahmen zur Befestigung des Gebläses in einer Gebäudeöffnung, einem Differenzdruckmesser und einem Volumenstrommesser so zu gestalten, daß Handwerker der betreffenden Gewerke (Trockenputzer, Fensterbauer, Dachdecker etc.) direkt vor Ort die Güte ihrer Arbeiten mit Hilfe einer "Handwerker-Blower-Door" überprüfen können, sind das Gebläse, der Einbaurahmen, der Differenzdruckmesser, der Volumenstrommesser sowie ein Mikrocontroller in ein einzelnes tragbares, kofferartiges Behältnis kompakt integriert.

EP 1 156 315 A2

**Beschreibung**

Die Erfindung bezieht sich auf ein Gerät zur Überprüfung der Luftdichtheit einer Gebäudehülle. Ein solches Gerät arbeitet nach dem sogenannten "Blower-Door-Meßsystem" und weist ein Gebläse, einen Einbaurahmen zur Befestigung des Gebläses in einer Gebäudeöffnung, einen Differenzdruckmesser und einen Volumenstrommesser auf.

Zur Zeit werden Blower-Door-Messungen vorwiegend von Sachverständigen, Ingenieurbüros oder Forschungsinstituten durchgeführt - günstigenfalls noch vor Ende der Bauarbeiten, oft aber auch erst nach der Fertigstellung eines Gebäudes. Die dabei entdeckten Schwachstellen, die zu erhöhtem Energieverbrauch und zu späteren Bauschäden führen, können dann oftmals nur noch schwer behoben werden - ganz abgesehen davon, daß die regelmäßige, nachträgliche Überprüfung der Luftdichtheit und die eventuelle Feststellung eines Baumangels durch Sachverständige für eine generelle Verbesserung der handwerklichen Praxis wenig hilfreich ist. Dies ist eine kostenträchtige und organisatorisch falsche Vorgehensweise.

Der Erfindung liegt die Aufgabe zugrunde, ein Gerät der angegebenen Gattung zu schaffen, mit dem die Handwerker der betreffenden Gewerke (Trockenputzer, Fensterbauer, Dachdecker etc.) direkt vor Ort die Güte ihrer Arbeiten mit Hilfe einer "Handwerker-Blower-Door" überprüfen können.

Die Aufgabe wird erfindungsgemäß durch die Kennzeichnungsmerkmale des Patentanspruchs 1 gelöst, wobei zweckmäßige Weiterbildungen der Erfindung in den Unteransprüchen gekennzeichnet sind.

Schwachstellen im Bezug auf die Luftdichtheit von Gebäuden können mit dem erfindungsgemäßen Gerät frühzeitig entdeckt und unmittelbar behoben werden. Die Qualität der luftdichten Gebäudehülle wird dadurch verbessert. Das Gerät ist kostengünstig und erleichtert den Handwerksbetrieben die Anschaffung desselben und damit den Einstieg in diese Meßtechnik. Das erfindungsgemäße Gerät ist kompakt, daher leicht transportierbar und zusätzlich robust. Ferner ist das Gerät leicht bedienbar. Es kann einfach und schnell eingebaut werden, und die Durchführung der Messungen erfolgt automatisch. Durch automatisierte Auswertung und Ergebnisdarstellung wird ein zusätzlicher Aufwand an Arbeitszeit für Auswertung und Dokumentation vermieden.

Fig. 1 zeigt eine schematische Darstellung der in das Gerät integrierten Steuerelektronik und

Fig. 2 zeigt die Druckdifferenz als Funktion des Volumenstroms für einen Axialventilator, wobei die Drehzahl des Ventilators auf der gesamten Kennlinie einen festen Wert einnimmt (hier 1425/min).

Aufgrund der Dimensionierung des Ventilators konnte eine kompakte Bauform erreicht werden (Abmessungen $\approx$ 500 mm x 500 mm x 350 mm), so daß das gesamte Gerät in einem Koffer untergebracht werden kann und somit leicht transportierbar ist (Gewicht $\approx$ 10 kg). Ebenso einfach wie der Transport ist auch der Einbau des Gerätes in einer Fensteröffnung. Eine Abdeckhaube des Gerätes, in der sich die komplette Steuerung befindet, wird entfernt und der Ventilator in die Fensteröffnung gestellt. Eine fest mit dem Gerät verbundene Folie wird am oberen Fensterrahmen befestigt. Anschließend wird die Folie in den beiden Fensterhälften eingespannt. Durch die Verwendung von Profilleisten und Klemmen geschieht die Abdichtung der Fensteröffnung unabhängig von Fensterprofil, Rahmendicke und Fenstergröße. Die Messung kann nun erfolgen. Dabei leitet die im Gerät eingebaute Automatik den Benutzer durch die Messung und führt die Auswertung und Dokumentation der Meßergebnisse durch. Das Bedienungspersonal benötigt keine spezifischen Kenntnisse des Verfahrensablaufs und der Auswertungsalgorithmen.

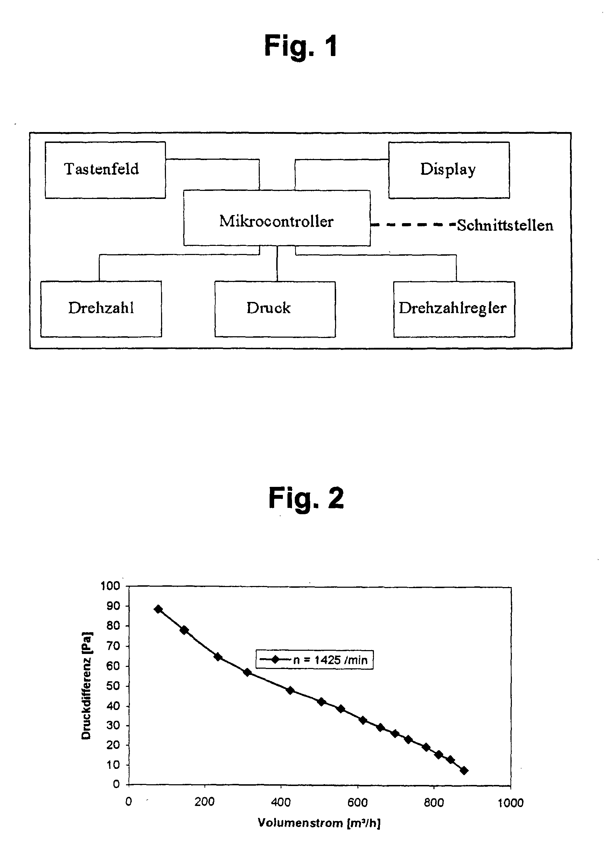

Das Herzstück des Gerätes ist die Steuer- und Auswertungselektronik nach Fig. 1. Deren Aufgabe ist die automatisierte Durchführung, Auswertung und Ergebnisdarstellung der Messung. Das dazu notwendige zentrale Element ist ein Mikrocontroller, der den Betriebsablauf in der folgenden Weise vorgibt:

- Die Schnittstelle zum Benutzer besteht aus einem Display und einer einfachen Tastatur (vier Cursortasten und einer Returntaste). Mit ihrer Hilfe wird der Benutzer durch die Messung geführt und kann Menüpunkte auswählen und zu Beginn der Messung einfache Eingaben (Temperaturen, Volumina, Dateinamen...) vornehmen.

- Während der Messung werden mehrere vorgegebene Differenzdruckwerte zwischen 20 Pa und 60 Pa eingeregelt. Dazu variiert der Mikrocontroller mit Hilfe einer Phasenanschnittsteuerung die Drehzahl des Ventilators. Mittels des eingebauten Drucksensors wird der aktuelle Differenzdruck ständig überprüft.

- Stimmen Vorgabe- und Istwerte überein, wird über eine Mittelwertbildung aus mehreren Druck- und Drehzahlwerten ein mittleres Wertepaar ($\Delta p,n$) aufgenommen.

- Nach Aufnahme aller Wertepaare werden die Volumenströme mit Hilfe der im Prozessor hinterlegten Ventilatorkennlinie berechnet.

- An die Wertepaare Druckdifferenz/Volumenstrom wird eine Potenzfunktion angepaßt, mit deren Hilfe dann der Volumenstrom für 50 Pa Druckdifferenz bestimmt wird.

- Durch Division durch das Gebäudevolumen wird der $n_{50}$-Wert berechnet und dann dem Anwender auf dem Display als Ergebnis angezeigt.

Ein weiterer Menüpunkt erlaubt dem Anwender das Anfahren einer festen Druckdifferenz, die dann so lange gehalten wird, bis ein manueller Abbruch erfolgt. Dies ermöglicht das qualitative Orten von Leckagen innnerhalb einer Gebäudehülle.

Mit Hilfe der Normkennlinie $\Delta p_{norm} = f(V_{norm})$ für $n_{norm} = const.$ und der Affinitätsgesetze wird bei einer Messung der Volumenstrom berechnet. Dadurch kann auf ein zweites Druckmeßgerät verzichtet werden, mit dessen Hilfe bei den auf dem Markt befindlichen Geräten der Volumenstrom bestimmt wird. Zur Berechnung des Volumenstroms wird während der Messung die Druckdifferenz $\Delta p$ und die Drehzahl n für einen Meßpunkt ermittelt. Unter Verwendung des Affinitätsgesetzes zur Umrechnung von Druckdifferenzen wird der entsprechende Punkt auf der Normkennlinie näherungsweise berechnet:

$$\Delta p_{norm} \cong \Delta p \cdot \left(\frac{n_{norm}}{n}\right)^2$$

Aus einer Normkennlinie des verwendeten Ventilators (siehe Fig. 2) wird dann der zu $\Delta p_{norm}$ gehörige Volumenstrom $\dot{V}_{norm}$ ermittelt. Anschließend wird das Affinitätsgesetz zur Umrechnung von Volumenströmen verwendet, um den Volumenstrom zum Meßpunkt $(\Delta p, n)$ zu erhalten:

$$\dot{V} = \dot{V}_{norm} \cdot \frac{n}{n_{norm}}$$

Damit liegt der Meßpunkt $(\Delta p, \dot{V})$ vor und kann für die Auswertung der Messung verwendet werden.

Bei einer Bestimmung des $n_{50}$-Wertes spielen sowohl der Volumenstrom als auch das Luftvolumen des vermessenen Gebäudes eine Rolle. Letzteres soll hier vernachlässigt werden, da es keine Eigenschaft des Meßgeräts bzw. des Meßvorgangs ist. Somit verbleibt als kritisch zu betrachtende Größe der Volumenstrom, der sich nach den obigen Darlegungen aus der Druckdifferenz zwischen innen und außen, der Drehzahl des Ventilators sowie der unter Normbedingungen aufgenommenen Kennlinie unter Anwendung der Affinitätsgesetze ergibt. Für eine ausführliche mathematische Darlegung der Fehlerfortpflanzung fehlt hier der Raum. Entsprechende Untersuchungen haben gezeigt, daß der relative Fehler der Volumenstromberechnung bei geringeren absoluten Volumenströmen größer wird. Als Beispiele mögen die folgenden beiden Fälle dienen:

1. Aus dem Wertepaar $(\Delta p, n)$ mit $\Delta p = 50\,\text{Pa} \pm 1\,\text{Pa}$ und
$n = 32/\text{s} \pm 0{,}12/\text{s}$ ergibt sich ein Volumenstrom

$$\dot{V} = 933\,\frac{m^3}{h} \pm 13\,\frac{m^3}{h}.$$

Der relative Fehler beträgt also ca. 1,5%.

2. Aus dem Wertepaar $(\Delta p, n)$ mit $\Delta p = 50\,\text{Pa} \pm 1\,\text{Pa}$ und
$n = 18{,}75/\text{s} \pm 0{,}12/\text{s}$ ergibt sich ein Volumenstrom

$$\dot{V} = 133\,\frac{m^3}{h} \pm 11\,\frac{m^3}{h}.$$

Der relative Fehler beträgt also 10%.

Allerdings würde ein solcher Volumenstrom von 113 m³/h mit 10% Fehler bei einem Einfamilienhaus von 100 m² Wohnfläche und 2,5 m Raumhöhe einem $n_{50}$-Wert zwischen 0,50/h und 0,41/h entsprechen. Damit wäre die Genauigkeit vollkommen ausreichend.

Im praktischen Vergleich zwischen mehreren Messungen mit einem Prototypen des neuen Gerätes und ebensolchen mit bekannten Geräten ergaben sich Abweichungen unter 4%. Dabei ist zu beachten, daß die Genauigkeit einer Messung mit den bekannten Geräten bei Verwendung analoger Meßgeräte von den Herstellern mit 5% angegeben wird.

Aus der Analyse baulicher Abläufe, ihrer organisatorischen Logik und der rechtlich eventuell notwendigen Nachweise wurde das Konzept einer als integrierendem Kompakt-Gerät arbeitenden "Handwerker-Blower-Door" entwickelt. Diese hat - im Unterschied zur bereits seit langem im Markt befindlichen "Blower-Door" für Sachverständige und Energieberater - andere Anforderungen zu erfüllen. Hier wurde dargelegt, wie insbesondere die Gesichtspunkte kostengünstiger Meßtechnik, einfacher Handhabung, implementierter Auswertung und weitgehend benutzerunabhängiger Ergebnisdarstellung behandelt werden. Theoretische Analysen der Meßgenauigkeiten und praktische Vergleiche des neu entwickelten Geräts mit derzeitigen kommerziellen Geräten für Fachleute und Sachverständige zeigen sehr gute Übereinstimmungen.

**Patentansprüche**

1. Gerät zur Überprüfung der Luftdichtheit einer Gebäudehülle, mit einem Gebläse, einem Einbaurahmen zur Befestigung des Gebläses in einer Gebäudeöffnung, einem Differenzdruckmesser und einem Volumenstrommesser, **dadurch gekennzeichnet, daß** das Gebläse, der Einbaurahmen, der Differenzdruckmesser, der Volumenstrommesser sowie ein Mikrocontroller in ein einzelnes tragbares, kofferartiges Behältnis kompakt integriert sind.

2. Gerät nach Anspruch 1, **dadurch gekennzeichnet, daß** das Gebläse ein Ventilator mit durch den Mikrocontroller mit Hilfe einer Phasenanschnittsteuerung variierbarer Drehzahl ist.

3. Gerät nach Anspruch 1 oder 2, **gekennzeichnet durch** eine Schnittstelle zum Benutzer, wobei die Schnittstelle aus einem Display und einer einfachen Tastatur, d.h. aus nicht mehr als vier Cursortasten und einer Returntaste besteht.

# Fig. 1

# Fig. 2